# EUROPÄISCHE PATENTANMELDUNG

(11) **EP 4 703 818 A1**
(43) Veröffentlichungstag der Anmeldung: **04.03.2026**
(21) Anmeldenummer: 24197347.8
(22) Anmeldetag: 29.08.2024
(51) Int. Cl.: G05B 19/042

(54) **STEUERGERÄT MIT CYBERRESILIENZ-EINRICHTUNG**

(71) Anmelder: Siemens Aktiengesellschaft, 80333 München (DE)
(72) Erfinder: Becker, Stefan, 91325 Adelsdorf (DE); Falk, Rainer, 85435 Erding (DE); Feist, Christian Peter, 80689 München (DE); Haasch, Axel, 91056 Erlangen (DE); Seeger, Guido, 91083 Baiersdorf (DE)
(74) Vertreter: Siemens Patent Attorneys

(57) **Zusammenfassung**

Das Steuergerät weist einen zugriffsgeschützten Prozessdatenspeicher auf, der fortlaufend Prozessdaten eines vom Steuergerät gesteuerten technischen Prozesses speichert, und umfasst zudem eine Cyberresilienz-Einrichtung (DRE), wobei die Cyberresilienz-Einrichtung (DRE) abhängig von gespeicherten Prozessdaten des Prozessdatenspeichers mindestens eine Cyberresilienz-Maßnahme am technischen Prozess vornimmt.

## Beschreibung

Die Erfindung bezieht sich auf Steuergeräte mit Cyberresilienz-Einrichtung.

Industrielle Steuerungssysteme wie speicherprogrammierbare Steuerungen (SPS) und andere Automatisierungsgeräte spielen eine entscheidende Rolle bei der Verwaltung und Steuerung komplexer technischer Prozesse in verschiedenen Branchen. Diese Systeme sind für die Überwachung von Abläufen verantwortlich, die von Produktionsanlagen über chemische Reaktoren bis hin zu Kraftwerken reichen. Da industrielle Umgebungen zunehmend digitalisiert und vernetzt werden, insbesondere mit dem Aufkommen des Internets der Dinge (loT), sind diese Steuerungssysteme oft mit externen Netzwerken und Systemen verbunden.

Die Verbindung von industriellen Steuerungssystemen mit externen Netzwerken, die zwar einerseits für die Fernüberwachung und -verwaltung vorteilhaft ist, führt andererseits zu potenziellen Schwachstellen für Cyberangriffe und Manipulationen. Angreifer können Schwachstellen in der Firmware oder Software von industriellen Steuergeräten nutzen, um technische Prozesse zu stören, was potenziell erhebliche Schäden oder sogar Sicherheitsrisiken verursachen kann. Die Zeitverzögerung zwischen der Entdeckung von Schwachstellen und der Implementierung von Patches verschärft dieses Problem zusätzlich und lässt industrielle Steuerungssysteme über längere Zeiträume potenziellen Bedrohungen ausgesetzt sein.

Im Falle eines erfolgreichen Cyberangriffs oder einer Manipulation besteht ein Erfordernis sicherzustellen, dass das kompromittierte industrielle Steuergerät schnell und zuverlässig in einen sicheren Zustand zurückversetzt werden kann. Allerdings reicht es möglicherweise nicht aus, nur das Gerät selbst wiederherzustellen, da auch die gesteuerten physischen Prozesse betroffen sein könnten. Beispielsweise könnte in Lebensmittelproduktionssystemen oder Prozessindustrien ein Angriff auf das Automatisierungssystem zu blockierten Rohren oder verfestigten geschmolzenen Materialien führen, was kostspielige Schäden und Ausfallzeiten zur Folge hätte.

Daher ist es die Aufgabe der vorliegenden Erfindung, ein verbessertes Steuergerät bereitzustellen, das im Vergleich zu den im Stand der Technik verwendeten Steuergeräten verbesserte Cyberresilienz-Fähigkeiten aufweist. Darüber hinaus ist es das Ziel der vorliegenden Erfindung, eine verbesserte Industrieanlage anzugeben.

Diese Aufgaben der vorliegenden Erfindung werden mit einem Steuergerät erfüllt, das die in Anspruch 1 der vorliegenden Erfindung beanspruchten Merkmale aufweist, sowie mit einer Fertigungsanlage erfüllt, die die in Anspruch 12 angegeben Merkmale aufweist.

Vorteilhafte Weiterbildungen der Erfindung sind in den zugehörigen Unteransprüchen, der nachfolgenden Beschreibung und der Zeichnung angegeben.

Das erfindungsgemäße Steuergerät umfasst einen zugriffsgeschützten Prozessdatenspeicher, der fortlaufend Prozessdaten eines vom Steuergerät gesteuerten technischen Prozesses speichert, und eine Cyberresilienz-Einrichtung, wobei die Cyberresilienz-Einrichtung abhängig von gespeicherten Prozessdaten des Prozessdatenspeichers mindestens eine Cyberresilienz-Maßnahme am technischen Prozess vornimmt.

Das erfindungsgemäße Steuergerät ermöglicht es, eine zuverlässige Aufzeichnung des Zustands des durch das erfindungsgemäße Steuergerät gesteuerten technischen Prozesses zu führen. Eine solche zuverlässige Aufzeichnung erlaubt eine verbesserte Wiederherstellung des technischen Prozesses, d. h. eine zuverlässige Fortführung oder Wiederaufnahme des technischen Prozesses. Erfindungsgemäß basiert die mindestens eine Cyberresilienz-Maßnahme auf gespeicherten Prozessdaten. Auf diese Weise kann das Steuergerät potenzielle Schäden infolge des durch das erfindungsgemäße Steuergerät gesteuerten Prozesses, etwa an Personen oder Komponenten, die am technischen Prozess beteiligt sind, wirksam begrenzen und eine zuverlässige und effiziente Wiederherstellung oder Wiederaufnahme sowohl des Steuergeräts als auch des von ihm gesteuerten technischen Prozesses gewährleisten. Das erfindungsgemäße Steuergerät verbessert folglich die Cyberresilienz von Industrieanlagen mit einem solchen Steuergerät erheblich und reduziert Ausfallzeiten und potenzielle Sicherheitsrisiken infolge eines Cyberangriffs auf ein solches Steuergerät oder infolge einer Manipulation eines solchen Steuergeräts.

Die Cyberresilienz-Maßnahme umfasst bei dem erfindungsgemäßen Steuergerät bevorzugt eine oder mehrere der folgenden Maßnahmen: Spülen einer Fluidleitung, insbesondere eines Rohres; Räumen eines Transportbandes; Aktivieren einer Heizung, insbesondere einer Mindestheizung, eines Schmelzprozesses; Bewegen eines Roboters und/oder eines autonomen Transportfahrzeugs in eine bestimmte Position, insbesondere eine vorbestimmte Position und/oder eine Default-Position; Umorganisieren eines Werkzeugmagazins, insbesondere Herstellen einer Default-Belegung von Werkzeugen des Werkzeugmagazins oder im Werkzeugmagazin; Betreiben einer Maschine in einen materialflussfreien und/oder werkstückfreien Zustand.

Solche Cyberresilienz-Maßnahmen wirken sich vorteilhaft besonders deutlich auf die Sicherheit industrieller Prozesse aus: Durch die Einbeziehung von Cyberresilienz-Maßnahmen wie dem Spülen von Fluidleitungen, dem Räumen von Transportbändern und der Verwaltung von Heizprozessen kann das Steuergerät potenzielle physische Schäden, die aus Cyberangriffen resultieren, wirksam mindern. Die Fähigkeit, Roboter oder autonome Fahrzeuge in sichere Positionen zu bewegen und Werkzeugmagazine umzuorganisieren, verbessert weiter die betriebliche Sicherheit und Kontinuität. Diese Maßnahmen tragen gemeinsam dazu bei, Störungen und potenzielle Verluste in industriellen Prozessen zu minimieren und verbessern damit die gesamte Betriebssicherheit, Prozesssicherheit und Zuverlässigkeit der gesteuerten technischen Prozesse und somit auch die Sicherheit der Industrieanlagen, in welchem ein oder mehrere erfindungsgemäße Steuergeräte zum Einsatz kommen.

Die Prozessdaten umfassen bevorzugt bei dem erfindungsgemäßen Steuergerät ein Prozessabbild, insbesondere ein jüngstes zurückliegendes erfasstes Prozessabbild, und/oder zurückliegende Prozessabbilder und/oder mindestens eine Statusinformation zum gesteuerten technischen Prozess.

Diese Weiterbildung der Erfindung ermöglicht zum einen vorteilhaft ein umfassenderes und detaillierteres Verständnis des Zustands des technischen Prozesses. Indem nicht nur das jüngste Prozessabbild, sondern auch historische Daten und spezifische Statusinformationen gespeichert werden, kann das Steuergerät fundiertere Entscheidungen bei der Implementierung von Cyberresilienz-Maßnahmen treffen. Diese detaillierte Aufzeichnung ermöglicht insbesondere eine genauere Wiederherstellung oder Wiederaufnahme des technischen Prozesses, was eine die Wiederherstellungszeit verkürzen kann und folglich auch einen Produktivitätsausfall einer Industrieanlage mit einem erfindungsgemäßen Steuergerät verkürzen kann. Zudem kann aufgrund einer in dieser Weiterbildung der Erfindung möglichen genaueren Erfassung des Zustands des technischen Prozesses eine passgenauere Ausgestaltung der Cyberresilienz-Maßnahme/n.

Der Prozessdatenspeicher kann in einer vorteilhaften Weiterbildung des erfindungsgemäßen Steuergeräts mit einem Ringdatenspeicher und/oder einem nichtflüchtigen Speicher, insbesondere einem Flash-Speicher und/oder einem EEPROM und/oder einem Non-Volatile Random Access Memory und/oder einem Magnetoresistiven RAM und/oder einem Ferroelectric RAM und/oder einem Phase-Change Memory, und/oder einem Battery-backed SRAM gebildet sein.

Diese Weiterbildung der Erfindung stellt sicher, dass kritische Prozessdaten auch bei Stromausfall oder Systemneustart erhalten bleiben. Die Verwendung von nichtflüchtigen Speichertechnologien bietet eine robuste Datenspeicherung und verbessert die Zuverlässigkeit der gespeicherten Prozessdaten. Die Ringdatenspeicherstruktur ermöglicht eine effiziente Speicherung und Verwaltung historischer Prozessdaten und ermöglicht es dem Steuergerät, eine umfassende, aber handhabbare Aufzeichnung des Zustands des technischen Prozesses durchzuführen. Eine solche zuverlässige Datenspeicherung ist entscheidend für effektive Cyberresilienz-Maßnahmen und eine genaue Systemwiederherstellung.

Das erfindungsgemäße Steuergerät ist in einer vorteilhaften Weiterbildung zur Attestierung der Vornahme der Cyberresilienz-Maßnahme eingerichtet.

In dieser vorteilhaften Weiterbildung der Erfindung ist die Transparenz der Cyberresilienz-Maßnahmen und eine Verantwortlichkeit für die Cyberresilienz-Maßnahmen zusätzlich verbessert. Durch die Bereitstellung einer Attestierung der durchgeführten Cyberresilienz-Maßnahmen stellt das Steuergerät eine überprüfbare Aufzeichnung seiner Cyberresilienz-Maßnahmen als Reaktion auf erkannte Bedrohungen bereit. Diese Funktion ist besonders relevant für spätere Prüfungszwecke, eine Analyse der Reaktion auf Vorfälle und die Einhaltung von Sicherheitsvorschriften. Sie ermöglicht auch eine bessere Koordination mit anderen Systemen und Personal bei der Beurteilung, Behandlung und Dokumentation von Cybervorfällen.

Das Steuergerät umfasst in einer vorteilhaften Weiterbildung der Erfindung eine Integritätsprüfungseinrichtung, die zur Vornahme der Cyberresilienz-Maßnahme in Abhängigkeit von einem Integritätsprüfergebnis der Integritätsprüfungseinrichtung ausgebildet ist.

In dieser Weiterbildung der Erfindung ist eine zusätzliche Sicherheitsebene vorhanden, indem Integritätsprüfungen in den Entscheidungsprozess für Cyberresilienz-Maßnahmen einbezogen werden. Indem Cyberresilienz-Maßnahmen auf Integritätsprüfergebnissen basieren, kann das Steuergerät potenzielle Sicherheitsverletzungen oder Systemanomalien genauer identifizieren und darauf reagieren. Diese Funktion verbessert die Präzision und Effektivität der Cyberresilienz-Maßnahmen und reduziert die Wahrscheinlichkeit von Fehlalarmen oder unnötigen Systemstörungen.

Das Steuergerät weist in bevorzugten Weiterbildungen der Erfindung einen, insbesondere kryptographisch geschützten, Watchdog auf, der zur Triggerung der Integritätsprüfungseinrichtung zur Gewinnung eines Integritätsprüfergebnisses ausgebildet ist.

Diese Weiterbildung der Erfindung bietet einen robusten Mechanismus zur kontinuierlichen Überwachung des technischen Prozesses. Der kryptographisch geschützte Watchdog stellt sicher, dass der Integritätsprüfungsprozess zur Gewinnung eines Integritätsprüfergebnisses selbst sicher und manipulationsresistent ist. Durch regelmäßiges Auslösen von Integritätsprüfungen hilft der Watchdog, eine ständige Aufmerksamkeit gegenüber potenziellen Bedrohungen zu gewährleisten, was eine schnellere Erkennung und Reaktion auf Sicherheitsprobleme ermöglicht. Dieser proaktive Ansatz verbessert die gesamte Sicherheitslage des erfindungsgemäßen Steuergeräts erheblich.

Das erfindungsgemäße Steuergerät weist bevorzugt eine Integritätsüberwachungseinrichtung zur Überwachung der Integrität des Steuergeräts auf, wobei die Integritätsüberwachungseinrichtung zur Triggerung der Integritätsprüfeinrichtung ausgebildet ist.

Diese vorteilhafte Weiterbildung der Erfindung gewährleistet eine umfassende Integritätsüberwachung. Durch eine eigens vorgesehene Integritätsüberwachungseinrichtung, die Integritätsprüfungen auslösen kann, hält das Steuergerät einen konstanten Zustand der Selbstbewertung aufrecht. Dieser mehrschichtige Ansatz zur Integritätsüberwachung verbessert die Fähigkeit des Systems, subtilere oder komplexere Angriffe zu erkennen, und verbessert die gesamte Resilienz und Zuverlässigkeit des Steuergeräts in industriellen Umgebungen.

Das Steuergerät ist in einer bevorzugten Weiterbildung der Erfindung ein Automatisierungsgerät.

Auf diese Weise ist auch im Bereich der industriellen Automatisierung die Cyberresilienz vorteilhaft verbessert. Dies ist besonders wichtig in Umgebungen, in denen kontinuierlicher Betrieb und Präzisionssteuerung unerlässlich sind, wie in Fertigungsanlagen oder chemischen Reaktoren.

Das erfindungsgemäße Steuergerät ist besonders bevorzugt ein loT-Gerät.

Vorteilhaft adressiert diese Weiterbildung der Erfindung einzigartige Sicherheitsherausforderungen von loT-Geräten in industriellen Umgebungen. Durch die Integration fortschrittlicher Cyberresilienz-Funktionen in loT-Geräte verbessert die Erfindung die Sicherheit vernetzter industrieller Systeme. Dies ist besonders wichtig angesichts der zunehmenden Abhängigkeit von loT-Technologien in industriellen Umgebungen und der potenziellen Schwachstellen, die durch ihre Konnektivität eingeführt werden.

Das Steuergerät ist in einer besonders bevorzugten Weiterbildung der Erfindung ein Fertigungsgerät.

Nachfolgend wird die Erfindung anhand eines in der Zeichnung dargestellten Ausführungsbeispiels näher erläutert.

Die einzige Zeichnungsfigur 1 zeigt ein Blockdiagramm eines cyberresilienten industriellen Geräts schematisch in einer Prinzipskizze.

Die vorliegende Offenbarung betrifft das Gebiet industrieller Steuergeräte, insbesondere solcher mit Cyberresilienz-Fähigkeiten. Im Kontext der zunehmenden Digitalisierung und Vernetzung industrieller Systeme, wie sie im Bereich des Internets der Dinge (loT) zu finden sind, ist die Sicherheit und Widerstandsfähigkeit dieser Systeme gegen Cyberangriffe oder Manipulationen von wachsender Bedeutung.

Industrielle Steuergeräte, wie speicherprogrammierbare Steuerungen (SPS), werden regelmäßig für die Steuerung komplexer technischer Prozesse eingesetzt. Diese Prozesse können von der Steuerung von Maschinen in einer Fertigungsanlage bis zur Regulation von Bedingungen in einem chemischen Reaktor reichen. Die Integrität und eine korrekte Funktionsweise dieser Steuergeräte sind entscheidend, um den reibungslosen Ablauf der von ihnen gesteuerten technischen Prozesse zu gewährleisten.

Aufgrund ihrer Verbindung mit externen Systemen sind diese Steuergeräte jedoch anfällig für Cyberangriffe oder Manipulationen. Solche Angriffe bilden etwa Schwachstellen in der Firmware oder Software des Geräts, die potenziell zu Störungen der technischen Prozesse führen, was erhebliche Schäden oder sogar Sicherheitsrisiken verursachen kann.

Während es bereits Lösungen gibt, die darauf abzielen, die Widerstandsfähigkeit dieser Geräte gegen Cyberangriffe zu erhöhen, besteht weiterhin Bedarf an Lösungen, die nicht nur das Steuergerät selbst schützen, sondern auch den Zustand des gesteuerten physischen Prozesses während eines Wiederherstellungsvorgangs berücksichtigen. Dies ist besonders wichtig in Szenarien, in denen ein Angriff auf das Steuerungssystem zu erheblichen Schäden am physischen System führen könnte, wie beispielsweise das Verstopfen von Rohren in einer Lebensmittelproduktionslinie oder die Verfestigung von geschmolzenem Metall in einem Hochofen.

Daher stellt die vorliegende Erfindung industrielle Steuergeräte mit erweiterten Cyberresilienz-Fähigkeiten bereit, die den Zustand des gesteuerten physischen Prozesses während eines Wiederherstellungsvorgangs berücksichtigen. Dieser Ansatz zielt darauf ab, mögliche Schäden an vom gesteuerten Prozess betroffenen physischen System zu begrenzen und eine zuverlässige und effiziente Wiederherstellung des Steuergeräts und des von ihm verwalteten technischen Prozesses zu gewährleisten.

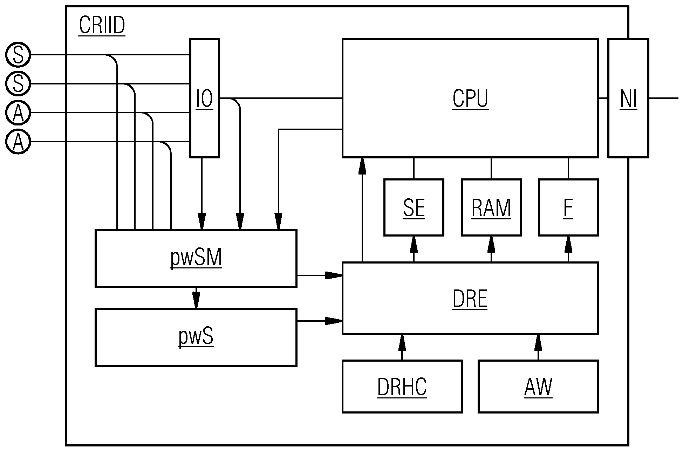

Fig. 1 zeigt ein cyberresilientes industrielles loT-Gerät CRIID, welches eine zentrale Prozessoreinheit CPU, ein Sicherheitselement SE, einen Arbeitsspeicher RAM und einen Flash-Speicher F aufweist. Die Prozessoreinheit CPU ist für die Ausführung einer Steuerungssoftware verantwortlich, die den technischen Prozess verwaltet. Das Sicherheitselement SE bietet sicheren Speicher für kryptografische Schlüssel und andere sensible Daten, während der Arbeitsspeicher RAM und der Flash-Speicher F temporären bzw. permanenten Speicher für die Steuerungssoftware und Daten bereitstellen.#

Das cyberresiliente industrielle loT-Gerät CRIID umfasst auch eine Eingabe-/Ausgabeschnittstelle IO, die mit Sensoren S und Aktuatoren A verbunden ist, die am technischen Prozess beteiligt sind. Die Sensoren S liefern Echtzeitdaten über den Zustand des technischen Prozesses, während die Aktuatoren A Aktionen basierend auf den Steuerbefehlen der Prozessoreinheit CPU ausführen.

In einigen Aspekten umfasst das cyberresiliente industrielle loT-Gerät CRIID ein Geräte-Laufzeit-Healthcheck-Modul DRHC und einen authentifizierten Watchdog AW. Das Geräte-Laufzeit-Healthcheck-Modul DRHC überwacht die Laufzeitintegrität des Geräts und prüft auf Anomalien oder Anzeichen von Manipulation. Der AW hingegen ist ein kryptografisch geschützter Watchdog, der das Geräte-Laufzeit-Healthcheck-Modul DRHC triggern kann, um ein Integritätsprüfergebnis zu erhalten. Wenn das Geräte-Laufzeit-Healthcheck-Modul DRHC oder der authentifizierte Watchdog AW ein potenzielles Sicherheitsproblem oder eine Anomalie erkennt, können sie eine Geräte-Resilienz-Engine DRE auslösen, um geeignete Resilienzmaßnahmen einzuleiten.

Die Geräte-Resilienz-Engine DRE interagiert mit den Komponenten Prozessoreinheit CPU, dem Sicherheitselement SE, dem Arbeitsspeicher RAM und dem Flash-Speicher F, um diese Resilienzmaßnahmen durchzuführen. Diese Maßnahmen können das Anhalten der Prozessoreinheit CPU, das Schreiben eines Referenzspeicherabbilds in den Flash-Speicher F oder das Löschen von Schlüsseln auf dem Sicherheitselement SE umfassen. Die Geräte-Resilienz-Engine DRE ist so konfiguriert, dass sie diese Maßnahmen abhängig vom Integritätsprüfergebnis des Geräte-Laufzeit-Healthcheck-Moduls DRHC oder vom authenticated Watchdog AW durchführt.

In einigen Ausführungsbeispielen umfasst das cyberresiliente industrielle loT-Gerät CRIID einen geschützten Prozessdatenspeicher, der kontinuierlich Prozessdaten des vom Gerät gesteuerten technischen Prozesses speichert. Dieser Prozessdatenspeicher bietet eine zuverlässige Aufzeichnung des Zustands des technischen Prozesses, was während eines Wiederherstellungsvorgangs entscheidend sein kann.

Das cyberresiliente industrielle loT-Gerät CRIID umfasst auch eine Cyberresilienz-Einrichtung, die abhängig von den gespeicherten Prozessdaten mindestens eine Cyberresilienz-Maßnahme am technischen Prozess vornimmt. Diese Cyberresilienz-Maßnahmen zielen darauf ab, mögliche Schäden am physischen System zu begrenzen und eine zuverlässige und effiziente Wiederherstellung des Steuergeräts und des von ihm verwalteten technischen Prozesses zu gewährleisten.

In einigen Aspekten ist das cyberresiliente industrielle loT-Gerät CRIID zur Attestierung der Durchführung der Cyberresilienz-Maßnahme konfiguriert. Diese Attestierung kann eine kryptografisch geschützte Bestätigung bereitstellen, dass eine Resilienz-Maßnahme eingeleitet wurde oder durchgeführt wird, und bietet somit eine zuverlässige Aufzeichnung der vom Gerät ergriffenen Resilienz-Maßnahmen. Dies kann besonders für Dokumentations-, Prüfungs- oder Fehlerbehebungszwecke nützlich sein.

Gemäß Fig. 1 kann das cyberresiliente industrielle loT-Gerät CRIID auch einen physischen Prozesszustandsmonitor pwSM umfassen, der mit der Eingabe-/Ausgabe-Schnittstelle IO verbunden ist, um den Zustand des physischen Prozesses zu überwachen. Der Prozesszustandsmonitor pwSM kann Informationen erfassen, indem er Signale auf den Leitungen zum Sensor S und Aktor A überwacht und/oder die Kommunikation zwischen Prozessoreinheit CPU und Eingabe-/Ausgabe-Schnittstelle IO abhört. In einigen Fällen kann die Prozessoreinheit CPU explizit Informationen über den Zustand der physischen Welt bereitstellen, wie beispielsweise ein Prozessabbild.

In einigen Aspekten kann das cyberresiliente industrielle loT-Gerät CRIID eine physische Prozess-Simulator-Komponente pwS enthalten. Die Prozess-Simulator-Komponente pwS kann zukünftige Zustände des physischen Prozesses basierend auf den von der Prozess-Simulator-Komponente pwSM erfassten Werten schätzen. Dies kann besonders nützlich sein, um die potenziellen Auswirkungen einer Resilienz-Maßnahme auf den physischen Prozess vorherzusagen und es der Geräte-Resilienz-Engine DRE zu ermöglichen, die am besten geeignete Cyberresilienz-Maßnahme auszuwählen.

In einigen Fällen kann die Geräte-Resilienz-Engine DRE eine kryptografisch geschützte Resilienz-Ausführungs-Attestierung generieren. Diese Attestierung kann bestätigen, dass eine Resilienz-Maßnahme eingeleitet wurde, oder Details über die aktuellen, abgeschlossenen oder geplanten Resilienz-Maßnahmen liefern. Dies kann eine zuverlässige Aufzeichnung der vom Gerät ergriffenen Resilienz-Maßnahmen bieten, was für Prüfungs- oder Fehlerbehebungszwecke nützlich sein kann.

In einigen Aspekten kann das cyberresiliente industrielle loT-Gerät CRIID zwei separate Resilienz-Engines haben: eine physische Prozess-Resilienz-Engine und eine Steuerfunktions-Resilienz-Engine. Jede dieser Engines kann durch das Geräte-Laufzeit-Healthcheck-Modul DRHC oder den authentifizierten Watchdog AW ausgelöst werden und Resilienz-Maßnahmen abhängig vom Integritätsprüfergebnis und dem Zustand des physischen Prozesses durchführen. Die physische Prozess-Resilienz-Engine kann Resilienz-Maßnahmen durchführen, die sich direkt auf den physischen Prozess auswirken, wie das Spülen einer Leitung oder das Bewegen eines Roboters in eine Standardposition. Die Steuerfunktions-Resilienz-Engine hingegen kann Resilienz-Maßnahmen durchführen, die sich auf die Steuerfunktion des Geräts auswirken, wie das Ersetzen der Firmware oder Software auf dem Gerät durch ein Referenzabbild.

In einigen Fällen wird der Zustand des physischen Prozesses durch die in einem nichtflüchtigen Speicher gespeichert, etwa dem Flash-Speicher F oder einem batteriebetriebenen RAM. Dies stellt sicher, dass die Zustandsinformationen auch im Falle eines Geräteneustartes oder Reboots zuverlässig verfügbar sind. Die Geräte-Resilienz-Engine DRE kann diese Zustandsinformationen verwenden, um während eines Wiederherstellungsvorgangs geeignete Resilienz-Maßnahmen am physischen Prozess durchzuführen. Zum Beispiel kann die Geräte-Resilienz-Engine DRE die Prozessoreinheit CPU anhalten, ein physisches Welt-Wiederherstellungsabbild in den Flash-Speicher F schreiben und die Prozessoreinheit CPU mit diesem Abbild starten, um eine Wiederherstellungsaktion in der physischen Welt durchzuführen. Nachdem die Wiederherstellungsaktion abgeschlossen ist, kann die Geräte-Resilienz-Engine DRE die Prozessoreinheit CPU erneut anhalten, ein reguläres Abbild in den Flash-Speicher F schreiben und die Prozessoreinheit CPU mit diesem Abbild starten.

Das dargestellte cyberresiliente industrielle loT-Gerät CRIID ist mit einer Reihe spezifischer Cyberresilienz-Maßnahmen ausgestattet, die darauf ausgelegt sind, potenzielle Risiken zu mindern und die betriebliche Integrität der gesteuerten physischen Prozesse aufrechtzuerhalten. Diese Maßnahmen werden von der Geräte-Resilienz-Engine DRE basierend auf den gespeicherten Prozessdaten und dem Integritätsprüfergebnis des Geräte-Laufzeit-Healthcheck-Moduls DRHC oder des authentifizierten Watchdogs AW implementiert.

In einigen Aspekten kann die Cyberresilienz-Maßnahme das Spülen einer Fluidleitung, insbesondere eines Rohres, umfassen. Diese Aktion kann besonders nützlich sein in Szenarien, in denen der technische Prozess den Transport von Flüssigkeiten beinhaltet, wie in einer Lebensmittelproduktionslinie oder einer chemischen Anlage. Durch das Spülen der Fluidleitung kann das cyberresiliente industrielle loT-Gerät CRIID potenzielle Verstopfungen oder Verunreinigungen der Leitung verhindern und damit mögliche Schäden am physischen System minimieren.

In einigen Fällen kann die Cyberresilienz-Maßnahme das Räumen eines Transportbandes beinhalten. Diese Aktion kann in Szenarien vorteilhaft sein, in denen der technische Prozess den Transport von Gütern oder Materialien auf einem Förderband umfasst. Durch das Räumen des Transportbandes kann das cyberresiliente industrielle loT-Gerät CRIID potenzielle Blockaden oder Störungen im Transportprozess verhindern und damit den reibungslosen Ablauf des technischen Prozesses sicherstellen.

In einigen Aspekten kann die Cyberresilienz-Maßnahme das Aktivieren einer Heizung, insbesondere einer Mindestheizung, eines Schmelzprozesses umfassen. Diese Aktion kann entscheidend sein in Szenarien, in denen der technische Prozess das Schmelzen von Materialien beinhaltet, wie in einem Hochofen. Durch die Aktivierung der Mindestheizung kann das cyberresiliente industrielle loT-Gerät CRIID die Verfestigung des geschmolzenen Materials verhindern und damit potenzielle Schäden am Ofen vermeiden und die Kontinuität des Schmelzprozesses sicherstellen.

In einigen Fällen kann die Cyberresilienz-Maßnahme die Bewegung eines Roboters und/oder eines autonomen Transportfahrzeugs in eine bestimmte Position, insbesondere eine vorbestimmte Position und/oder eine Default-Position, beinhalten. Diese Aktion kann in Szenarien vorteilhaft sein, in denen der technische Prozess den Einsatz von Robotern oder autonomen Transportfahrzeugen umfasst. Durch die Bewegung dieser Einheiten in eine bestimmte Position kann das cyberresiliente industrielle loT-Gerät CRIID potenzielle Kollisionen oder Störungen im Betrieb dieser Einheiten verhindern und damit den reibungslosen Ablauf des technischen Prozesses sicherstellen.

In einigen Aspekten kann die Cyberresilienz-Maßnahme eine Umorganisation eines Werkzeugmagazins, insbesondere eine Herstellung einer Default-Belegung von Werkzeugen des Werkzeugmagazins oder im Werkzeugmagazin, umfassen. Diese Aktion kann in Szenarien nützlich sein, in denen der technische Prozess die Verwendung eines Werkzeugmagazins beinhaltet, wie beispielsweise in einer Fertigungsanlage. Durch die Umorganisation des Werkzeugmagazins kann das cyberresiliente industrielle loT-Gerät CRIID sicherstellen, dass die richtigen Werkzeuge an den richtigen Positionen verfügbar sind und damit den reibungslosen Ablauf des Fertigungsprozesses gewährleisten.

Das cyberresiliente industrielle loT-Gerät CRIID ist wie vorhergehend beschrieben mit einem Prozessdatenspeicher ausgestattet, der fortlaufend Prozessdaten des vom Gerät gesteuerten technischen Prozesses speichert. Dieser Prozessdatenspeicher bietet eine zuverlässige Aufzeichnung des Zustands des technischen Prozesses, was während eines Wiederherstellungsvorgangs entscheidend sein kann.

In einigen Aspekten ist der Prozessdatenspeicher mit einem Ringdatenspeicher gebildet. Ein Ringdatenspeicher, auch bekannt als zirkulärer Puffer oder Ringpuffer, ist eine Datenstruktur, die einen einzelnen, festen Puffer so verwendet, als wäre er an den Enden verbunden. Diese Struktur eignet sich gut für die Pufferung von Datenströmen. Im Kontext des cyberresilienten industriellen loT-Geräts CRIID kann der Ringdatenspeicher eine Sequenz von Prozessdaten speichern, wie das jüngste erfasste Prozessabbild, zurückliegende Prozessabbilder und/oder mindestens eine Statusinformation zum gesteuerten technischen Prozess. Wenn der Puffer gefüllt ist, werden neue Daten am Anfang des Puffers geschrieben und überschreiben die alten. In einigen Fällen ist der Prozessdatenspeicher mit einem nichtflüchtigen Speicher gebildet. Nichtflüchtiger Speicher ist eine Art von Computerspeicher, der die gespeicherten Informationen auch nach dem Ausschalten der Stromversorgung behalten kann. Beispiele für nichtflüchtigen Speicher sind der bereits erwähnte Flash-Speicher F oder auch Electrically Erasable Programmable Read-Only Memory (EEPROM), Non-Volatile Random Access Memory (NVRAM), Magnetoresistive RAM (MRAM), Ferroelectric RAM (FeRAM oder FRAM), Phase-Change Memory (PCM) und Battery-backed Static Random Access Memory (SRAM). Die Verwendung von nichtflüchtigem Speicher stellt sicher, dass die Prozessdaten auch im Falle eines Geräteneustartes oder Reboots zuverlässig verfügbar sind.

In einigen Aspekten kann die Geräte-Resilienz-Engine DRE die zentrale Prozessoreinheit CPU anhalten, ein physisches Prozess-Wiederherstellungsabbild in den Flash-Speicher F zu schreiben und mit diesem Prozess-Wiederherstellungsabbild zu starten, um eine Wiederherstellungsaktion des physischen Prozesses durchzuführen. Diese Wiederherstellungsaktion kann auf den gespeicherten Prozessdaten und dem Integritätsprüfergebnis des Geräte-Laufzeit-Healthcheck-Moduls DRHC oder des authentifizierten Watchdogs AW basieren. Zum Beispiel kann die Wiederherstellungsaktion das Betreiben einer Maschine in einen materialflussfreien und/oder werkstückfreien Zustand beinhalten. Diese Aktion kann in Szenarien vorteilhaft sein, in denen der technische Prozess die Verarbeitung oder Herstellung von Werkstücken umfasst. Durch das Betreiben der Maschine in einen materialflussfreien und/oder werkstückfreien Zustand kann das cyberresiliente industrielle loT-Gerät CRIID potenzielle Blockaden oder Störungen im Verarbeitungs- oder Herstellungsprozess verhindern und damit den reibungslosen Ablauf des technischen Prozesses sicherstellen.

Nachdem die Wiederherstellungsaktion abgeschlossen ist, kann die Geräte-Resilienz-Engine DRE die Prozessoreinheit CPU erneut anhalten, ein reguläres Abbild in den Flash-Speicher F schreiben und die Prozessoreinheit CPU mit diesem Abbild starten. Dies stellt sicher, dass das cyberresiliente industrielle loT-Gerät CRIID nach dem Wiederherstellungsvorgang zu seinem normalen Betrieb zurückkehrt und bereit ist, den technischen Prozess weiter zu steuern.

Das dargestellte cyberresiliente industrielle loT-Gerät CRIID kann in verschiedenen Kontexten implementiert sein, beispielsweise als Automatisierungsgerät, loT-Gerät und/oder Fertigungsgerät.

In einigen Aspekten kann das cyberresiliente industrielle loT-Gerät CRIID, wenn es als Automatisierungsgerät implementiert wird, für die Steuerung einer breiten Palette von automatisierten Prozessen verantwortlich sein, wie sie in Fertigungsanlagen, chemischen Reaktoren oder Kraftwerken zu finden sind. Die Cyberresilienz-Funktionen des Geräts, einschließlich der Geräte-Resilienz-Engine DRE, des Geräte-Laufzeit-Healthcheck-Moduls DRHC und des authentifizierten Watchdogs AW, können robusten Schutz gegen potenzielle Cyberangriffe oder Manipulationen bieten. Diese Funktionen können den reibungslosen Ablauf der automatisierten Prozesse sicherstellen, indem sie basierend auf den gespeicherten Prozessdaten und dem Integritätsprüfergebnis geeignete Resilienz-Maßnahmen einleiten.

In einigen Fällen kann das cyberresiliente industrielle loT-Gerät CRIID, wenn es als loT-Gerät implementiert wird, Teil eines größeren Netzwerks von miteinander verbundenen Geräten, Sensoren S und Aktuatoren A sein. Die Cyberresilienz-Maßnahmen des cyberresilienten industriellen loT-Geräts CRIID können robusten Schutz gegen potenzielle Cyberangriffe oder Manipulationen bieten, die die Konnektivität des Geräts mit externen Systemen ausnutzen könnten. Zum Beispiel kann die Geräte-Resilienz-Engine DRE Resilienz-Maßnahmen einleiten, wie das Anhalten der Prozessoreinheit CPU, das Schreiben eines Referenzspeicherabbilds in den Flash-Speicher F oder das Löschen von Schlüsseln auf dem Sicherheitselement SE, wodurch die Integrität und korrekte Funktionsweise des cyberresilienten industriellen loT-Geräts CRIID sichergestellt wird.

In einigen Aspekten kann das cyberresiliente industrielle loT-Gerät CRIID, wenn es als Fertigungsgerät implementiert wird, für die Steuerung komplexer Fertigungsprozesse verantwortlich sein, wie sie in einer Produktionslinie zu finden sind. Die Cyberresilienz-Funktionen des Geräts können robusten Schutz gegen potenzielle Cyberangriffe oder Manipulationen bieten, die den Fertigungsprozess stören und erhebliche Schäden oder Sicherheitsrisiken verursachen könnten. Zum Beispiel kann die Geräte-Resilienz-Engine DRE Resilienzmaßnahmen einleiten, wie das Betreiben einer Maschine in einen materialflussfreien und/oder werkstückfreien Zustand, wodurch der reibungslose Ablauf des Fertigungsprozesses sichergestellt wird.

In anderen Ausführungsformen, die in allen anderen Aspekten der dargestellten Ausführungsform entsprechen, kann das cyberresiliente industrielle loT-Gerät CRIID in anderen Kontexten implementiert werden, wie in Energiemanagementsystemen, Transportsystemen oder Gesundheitssystemen. Unabhängig vom spezifischen Kontext können die Cyberresilienz-Funktionen des Geräts robusten Schutz gegen potenzielle Cyberangriffe oder Manipulationen bieten und so den reibungslosen Ablauf der von ihm gesteuerten technischen Prozesse sicherstellen.

## Patentansprüche

1. Steuergerät mit einem zugriffsgeschützten Prozessdatenspeicher, der fortlaufend Prozessdaten eines vom Steuergerät gesteuerten technischen Prozesses speichert, und einer Cyberresilienz-Einrichtung (DRE), bei welchem die Cyberresilienz-Einrichtung (DRE) abhängig von gespeicherten Prozessdaten des Prozessdatenspeichers mindestens eine Cyberresilienz-Maßnahme am technischen Prozess vornimmt.

2. Steuergerät nach Anspruch 1, bei welchem die Cyberresilienz-Maßnahme eine oder mehrere der nachfolgend gelisteten Maßnahmen umfasst:
- ein Spülen einer Fluidleitung, insbesondere eines Rohres,
- ein Räumen eines Transportbandes,
- ein Aktivieren einer Heizung, insbesondere einer Mindestheizung, eines Schmelzprozesses
- eine Bewegung eines Roboters und/oder eines autonomen Transportfahrzeugs in eine bestimmte Position, insbesondere eine vorbestimmte Position und/oder eine Default-Position
- eine Umorganisation eines Werkzeugmagazins, insbesondere eine Herstellung einer Default-Belegung von Werkzeugen des Werkzeugmagazins oder im Werkzeugmagazin
- ein Betreiben einer Maschine in einen materialflussfreien und/oder werkstückfreien Zustand.

3. Steuergerät nach einem der vorhergehenden Ansprüche, bei welchem die Steuerdaten ein Prozessabbild, insbesondere ein jüngstes zurückliegendes erfasstes Prozessabbild, und/oder zurückliegende Prozessabbilder und/oder mindestens eine Statusinformation zum gesteuerten technischen Prozess umfasst.

4. Steuergerät nach einem der vorhergehenden Ansprüche, bei welchem der Prozessdatenspeicher mit einem Ringdatenspeicher, und/oder einem nichtflüchtigen Speicher, insbesondere einem Flash-Speicher (F) und/oder einem EEPROM und/oder einem Non-Volatile Random Access Memory und/oder einem Magnetoresistiven RAM und/oder einem Ferroelectric RAM und/oder einem Phase-Change Memory und/oder einem Battery-backed SRAM gebildet ist.

5. Steuergerät nach einem der vorhergehenden Ansprüche, welches zur Attestierung der Vornahme der Cyberresilienz-Maßnahme eingerichtet ist.

6. Steuergerät nach einem der vorhergehenden Ansprüche mit einer Integritätsprüfungseinrichtung (DRHC), welches zur Vornahme der Cyberresilienz-Maßnahme in Abhängigkeit von einem Integritätsprüfergebnis der Integritätsprüfungseinrichtung (DRHC) ausgebildet ist.

7. Steuergerät nach einem der vorhergehenden Ansprüche, welches einen insbesondere kryptographisch geschützten Watchdog (AW) aufweist, welcher zur Triggerung der Integritätsprüfungseinrichtung (DRHC) zur Gewinnung eines Integritätsprüfergebnisses ausgebildet ist.

8. Steuergerät nach einem der vorhergehenden Ansprüche, welches eine Integritätsüberwachungseinrichtung zur Überwachung der Integrität des Steuergeräts aufweist, wobei die Integritätsüberwachungseinrichtung zur Triggerung der Integritätsprüfeinrichtung (DRHC) ausgebildet ist.

9. Steuergerät nach einem der vorhergehenden Ansprüche, welches ein Automatisierungsgerät ist.

10. Steuergerät nach einem der vorhergehenden Ansprüche, welches ein loT-Gerät ist.

11. Steuergerät nach einem der vorhergehenden Ansprüche, welches ein Fertigungsgerät ist.

12. Industrieanlage mit einem Steuergerät nach einem der vorhergehenden Ansprüche, insbesondere Fertigungsanlage.
